Europäisches Patentamt

European Patent Office

Office européen des brevets

(19)

(11) Publication number: **0 459 592 A2**

## (12) EUROPEAN PATENT APPLICATION

(21) Application number: **91201321.6**

(22) Date of filing: **30.05.91**

(51) Int. Cl.⁵: **C08G 59/02**, C09D 163/00, C09D 5/03

(30) Priority: **01.06.90 JP 141359/90**

(43) Date of publication of application:
**04.12.91 Bulletin 91/49**

(84) Designated Contracting States:
**BE CH DE ES FR GB IT LI NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Goto, Hideyuki, c/o Yuka Shell Epoxy K.K.**
**Nishiazabu Mitsui Bld., 17-30 Nishiazabu 4-chome**
**Minato-ku, Tokyo 106(JP)**
Inventor: **Kobayashi, Yoshikazu, c/o Yuka Shell Epoxy K.K.**
**Nishiazabu Mitsui Bld., 17-30 Nishiazabu 4-chome**
**Minato-ku, Tokyo 106(JP)**
Inventor: **Yamamoto, Yojiro, c/o Yuka Shell Epoxy K.K.**
**Nishiazabu Mitsui Bld., 17-30 Nishiazabu 4-chome**
**Minato-ku, Tokyo 106(JP)**

(74) Representative: **Tuijn, Jan Warnaar et al**
**Shell Internationale Research Maatschappij B.V., Patents, Licensing & Trade Marks Division, P.O. Box 302**
**NL-2501 CH The Hague(NL)**

(54) Modified epoxy resin composition.

(57) A modified epoxy resin composition obtainable by:
i) reacting one or more epoxy resin compound(s) with a dibasic acid, to obtain an epoxy group conversion of from 10 to 70%, and
ii) reacting the resulting dibasic ester group containing epoxy resin with a trihydric primary aliphatic alcohol having of from 5 to 12 carbon atoms, to obtain a conversion of remaining epoxy groups of from 30 to 80%.
Said modified epoxy resin compositions have high reactivity and provide cured products having a good balance of adhesion, flexibility and impact strength.

EP 0 459 592 A2

The present invention relates to modified epoxy resin compositions, which cure rapidly with an epoxy resin curing agent, thereby providing cured products having excellent flexibility and adhesion properties and high-impact properties, and thus can be suitably used as coating material. The invention further relates to coating compositions comprising said modified epoxy resin compositions.

Epoxy resins are known for their excellent characteristics for use in coatings, adhesives and in civil engineering and electrical engineering applications, but, as a result of the rigidity the cured resins generally have, epoxy resins are often deficient in flexibility and impact strength when used as, for instance, coating material.

To eliminate the above-mentioned defects of epoxy resins it has been proposed to improve the flexibility and impact strength of epoxy resins, or to use epoxy resin curing agents which impair excellent flexibility and high-impact strength to the cured products.

For example, Japanese Patent Application Disclosure No. 230724-1988 aims at improving the flexibility of epoxy resins by providing a modified epoxy resin being a reaction product of an epoxy resin with a trihydric aliphatic primary alcohol having 5 to 12 carbon atoms. However, the modified epoxy resin showed insufficient flexibility and impact strength.

Further, though curing agents such as polyamides and long-chained amines provide cured products having an excellent flexibility, said cured products are poor not only in curing velocity but also in physical properties.

The invention therefore relates to a modified epoxy resin composition obtainable by:

i) reacting one or more epoxy resin compound(s) with a dibasic acid to obtain an epoxy group conversion of from 10 to 70%, and

ii) reacting the resulting esterified epoxy resin with a trihydric primary aliphatic alcohol having from 5 to 12 carbon atoms to obtain an epoxy group conversion of from 30 to 80% in said esterified epoxy resin.

Further, the invention relates to a coating composition comprising the above-mentioned modified epoxy resin composition and a curing agent.

The epoxy resin compound(s) to be employed in i) may be bisphenol-type epoxy resins such as, for example, commercially available EPIKOTE 807, EPIKOTE 828, EPIKOTE 1001 and EPIKOTE 1002 (EPIKOTE is a trade mark). The above-mentioned epoxy resin compounds may be used alone or in an admixture of two or more kinds thereof, having varying molecular weights and epoxy equivalent weights (EEW).

Further, the above-mentioned epoxy resins may be used in admixture with one or more polyfunctional epoxy resins having at least three epoxy groups per molecule.

As such polyfunctional epoxy resins may be mentioned the reaction products between epihalohydrins and novolaks of phenols such as phenol, cresol and bisphenol A. As commercially available products of such polyfunctional epoxy resins may be mentioned
EPIKOTE 152, EPIKOTE 154, EPIKOTE 157, EPIKOTE 180.

As the dibasic acid applied in i) may be mentioned dibasic acids having at least four carbon atoms such as, for example, maleic acid, phthalic acid, adipic acid and polymerized fatty acids (particularly dimer acids) obtained by polymerization of unsaturated fatty acids. Particularly preferable are polymerized fatty acids (particularly dimer acids) obtained by polymerization of unsaturated fatty acids having 16 to 18 carbon atoms.

Commercially available products of polymerized fatty acids are, for example, Enpol 1022, Enpol 1024 (available from Emery Co., Ltd.), Versadime 216, Versadime 228, and Versadime 288 (available from Henkel Hakusui K.K.) which have a dimer acid content of from 50 to 97% and an acid number in the range of from 180 to 200.

The dibasic acid may be used in combination with a dihydric phenol (as a mixture of the two kinds of compounds) to effect a reaction with the epoxy resin compound(s) in i). As such dibasic phenols may be mentioned bisphenol A, bisphenol F, phenol and cresol.

The ratio wherein the epoxy resin compound(s) is (are) reacted with the dibasic acid is such that the degree of epoxy group conversion of the epoxy resin compound(s) is of from 10 to 70%, preferably of from 15 to 60%, i.e. per one equivalent of the epoxy resins, of from 0.05 to 0.6 equivalents, preferably of from 0.06 to 0.5 equivalents of the amount of the dibasic acid are reacted (in case where the dibasic acid and dihydric phenol are used in combination, the sum of the amounts thereof). It was found that if the epoxy group conversion degree becomes too low, no marked improvement in coating properties and performances such as flexibility and impact strength can be obtained.

The esterification reaction preferably proceeds in the presence of an esterification catalyst. Any catalyst generally known in this sort of reaction can be used, in particular quaternary ammonium salts such as tetramethylammonium chloride, tetrabutylammonium bromide, triacylmethylammonium chloride, benzyltriethylammonium chloride, and triphenylammonium chloride, quaternary phosphonium salts such as tetraphenylphosphonium chloride, and quaternary arsonium salts. The amount of the catalysts to be used in i) lies in the range of from 50 to 1000 ppm, preferably of from 200 to 500 ppm based on the total weight of the epoxy resin compound(s) and the dibasic acid (plus the charge weight of the dihydric phenols, if used).

The reaction temperature applied in i) may vary of from 130 to 180 °C, preferably of from 140 to 165 °C.

The dibasic acid ester-containing epoxy resins obtained in i) are subsequently reacted in ii) with a trihydric aliphatic primary alcohol having of from 5 to 12 carbon atoms. As useful trihydric aliphatic primary alcohols may be mentioned

1,1,1-tri(hydroxymethyl) propane,
1,1,2-tri(hydroxymethyl) propane,
1,2,3-tri(hydroxymethyl) propane,
1,1,3-tri(hydroxymethyl) propane,
1,1,1-tri(hydroxymethyl) ethane,
1,1,2-tri(hydroxymethyl) ethane,
1,1,1-tri(hydroxymethyl) butane,
1,1,3-tri(hydroxymethyl) butane,
1,3,4-tri(hydroxymethyl) butane,
2,2,3-tri(hydroxymethyl) butane,
1,1,1-tri(hydroxymethyl) pentane,
1,1,1-tri(hydroxymethyl) hexane,
1,2,3-tri(hydroxymethyl) heptane,
1,2,5-tri(hydroxymethyl) octane,
2,2,4-tri(hydroxymethyl) nonane,
1,1,1-tri(hydroxymethyl) nonane and
1-hydroxy-3-oxa-5,5'-di(hydroxymethyl) heptane.

The etherification reaction preferably proceeds in the presence of an etherification catalyst. As examples may be mentioned amines, Lewis acids such as alkanoic acids of iron, zinc, aluminium and boron and their halogenides and alkali metal alcoholates of polyoxy alkylene polyols. Preferred etherification catalysts include stannous salts such as tin dichloride and in particular stannous salts of alkanoic acids having 2 to 30 carbon atoms per molecule, such as for example octanoic acid. The amount of the catalysts employed in ii) lies in the range of from 0.01 to 0.20% by weight, preferably between 0.05 and 0.15% by weight based on the total weight of components present in the reaction mixture.

The reaction temperature applied in ii) may vary from 140 to 185 °C, preferably from 160 to 180 °C.

In ii) the dibasic acid ester-containing epoxy resin is reacted with the above-mentioned trihydric aliphatic primary alcohol such that the epoxy group conversion degree of said epoxy resin turns out to be from 30 to 80%, preferably from 40 to 70%. It was found that if the conversion degree is too low, coating properties and performances such as flexibility and impact strength are not improved, whereas if the conversion degree is too high, apart from the fact that the just mentioned improved effects cannot be obtained, gelation is liable to take place during the etherification reaction too.

The modified epoxy resins according to the present invention can be used for various purposes in particular for providing coatings having excellent flexibility, adhesion and impact strength.

In powder coatings comprising the modified epoxy resins according to the present invention epoxy curing agents can be used such as dicyandiamide, acid terminal polyesters, resorcinol-type phenolic resins and aromatic amines.

The above-mentioned resorcinol-type phenolic resins are resins obtained by condensing phenols with formaldehyde in the presence of basic catalysts. As such phenols may be used o-cresol, p-cresol, m-cresol, p-tertiary butyl phenol, p-ethyl phenol, 2,3-xylenol, 2,5-xylenol, p-tertiary amino phenol, p-phenyl phenol, m-methoxyphenol, bisphenol A and bisphenol F which may be used individually or in combination of two or more compounds.

As the aromatic amines may be mentioned m-phenylenediamine, diamino-diphenylmethane, methylenebisorthotoluidine and diaminodiphenyl sulfone.

The modified epoxy resins according to the present invention may also be used in coatings other than powder coatings such as, for example, in stoving lacquers and cold-setting coatings, wherein use may also be made of the aforementioned various epoxy resin curing agents.

When preparing various kinds of coatings using the modified epoxy resins according to the present invention, use may also be made, if necessary, of other kinds of epoxy resins, together with various kinds of additives such as solvents, diluents, pigments and stabilizers.

3

The present invention will be further explained hereinafter in more details, by way of examples and comparative examples.

EXAMPLES

Example 1

Into a 2 l-separable flask equipped with a stirrer, thermometer and gaseous nitrogen-inlet tube were charged EPIKOTE 828 (701.8 g) (EEW = 187), a commercially available dimer acid Enpol 1014 (95.6 g) and bisphenol A (157.8 g), which were dissolved in one another under gaseous nitrogen stream at 100 °C. Tetramethyl ammonium chloride (0.29 g) was added to the resulting solution, followed by reaction under heating at 160 to 165 °c for three hours.

The resulting dibasic ester group-containing epoxy resin had an EEW of 510, with an epoxy group conversion degree of 50%.

Next trimethylolpropane (82.1 g) was added to the above prepared reaction product and stannous chloride (1.45 g) was added to the solution. The reaction mixture was heated to 175 °c for three hours. The product resin obtained after the completion of the reaction had an EEW of 1501, with an epoxy group conversion degree of 63%.

Example 2

To a separable flask were charged EPIKOTE 828 (1000 g), Enpol 1014 (231.7 g) and bisphenol A (312.7 g) which were dissolved in one another under gaseous nitrogen stream at 100 °C. Tetramethyl ammonium chloride (0.46 g) was added to the resulting solution, followed by reaction at 160 to 165 °C for three hours.

The resulting dibasic ester group-containing epoxy resin had an EEW of 945, with an epoxy group conversion degree of 69%.

Similarly as in Example 1 trimethylolpropane (70.8 g) and stannous chloride (2.26 g) were added to the reaction product, followed by reaction at 170 to 175 °C for three hours. The product resin obtained after the completion of the reaction had an EEW of 2130, with an epoxy group conversion degree of 54%.

Example 3

To a separable flask were charged EPIKOTE 828 (1150 g), Enpol 1014 (146.3 g) and bisphenol A (166.5 g), which were dissolved in one another at 100 °C under gaseous nitrogen stream. Tetramethyl ammonium chloride (0.44 g) was added to the resulting solution, followed by reaction at 160 to 165 °C for three hours.

The resulting dibasic ester group-containing epoxy resin had an EEW of 375, with an epoxy group conversion degree of 37%.

Similarly as in Example 1 trimethylolpropane (100.2 g) and stannous chloride (2.19 g) were added to the reaction product, followed by reaction at 170 to 175 °C for two hours.

The product resin obtained after the completion of the reaction had an EEW of 646, with an epoxy group conversion degree of 38%.

Example 4

To a separable flask were charged EPIKOTE 828 (1100 g), EPIKOTE 157 (110 g) (EEW = 208), Enpol 1014 (153.3 g) and bisphenol A (170.1 g), which were dissolved in one another at 100 °C under gaseous nitrogen stream. Tetramethyl ammonium chloride (0.46 g) was added to the resulting solution followed by reaction at 160 to 165 °C for three hours.

The resulting dibasic ester group-containing epoxy resin had an EEW of 367, with an epoxy group conversion degree of 35%.

Similarly as in Example 1 trimethylolpropane (110.5 g) and stannous chloride (2.30 g) were added to the reaction product, followed by reaction at 170 to 175 °C for one and a half hours. The product resin obtained after the completion of the reaction had an EEW of 639, with an epoxy group conversion degree of 38%.

Comparative Example 1

To a separable flask were charged EPIKOTE 828 (701.8 g), and bisphenol A (207.3 g), which were dissolved in one another at 100 °C under gaseous nitrogen stream. Tetramethyl ammonium chloride (0.27 g) was added to the resulting solution, followed by reaction at 160 to 165 °C for three hours.

The resulting epoxy resin had an EEW of 521, with an epoxy group conversion degree of 54%.

Similarly as in Example 1 trimethylolpropane (75.7 g) and stannous chloride (1.38 g) were added to the reaction product, followed by a reaction at 170 to 175 °C for three hours. The modified epoxy resin obtained after the completion of the reaction had an EEW of 1291, with an epoxy group conversion degree of 56%.

Comparative Example 2

To a separable flask were charged EPIKOTE 828 (701.8 g), Enpol 1014 (78.8 g) and bisphenol A (7.4 g), which were dissolved in one another at 100 °C under gaseous nitrogen stream. Tetramethyl ammonium chloride (0.24 g) was added to the resulting solution, followed by reaction at 160 to 165 °C for three hours.

The resulting dibasic ester group-containing epoxy resin had an EEW of 231, with an epoxy group conversion degree of 9%.

Similarly as in Example 1 trimethylolpropane (126.4 g) and stannous chloride (1.28 g) were added to the reaction product, followed by reaction at 170 to 175 °C for three hours. The modified epoxy resin obtained after the completion of the reaction had an EEW of 603, with an epoxy group conversion degree of 56%.

Comparative Example 3

To a separable flask were charged EPIKOTE 828 (701.8 g), Enpol 1014 (95.6 g) and bisphenol A (157.8 g), which were dissolved in one another at 100 °C under gaseous nitrogen stream. Tetramethyl ammonium chloride (0.29 g) was added to the resulting solution, followed by reaction at 160 to 165 °C for three hours.

The resulting dibasic ester group-containing epoxy resin had an EEW of 510, with an epoxy group conversion degree of 50%.

Similarly as in Example 1 trimethylolpropane (101.9 g) and stannous chloride (1.48 g) were added to the reaction product. In an attempt to effect a reaction at 170 to 175 °C for three hours for obtaining a modified epoxy resin with an epoxy group conversion degree of 81% gelation took place during the reaction.

Comparative Example 4

To a separable flask were charged EPIKOTE 828 (701.8 g), Enpol 1014 (95.6 g) and bisphenol A (157.8 g), which were dissolved in one another at 100 °C under gaseous nitrogen stream. Tetramethyl ammonium chloride (0.29 g) was added to the resulting solution, followed by reaction at 160 to 165 °C for three hours.

The resulting dibasic ester group-containing epoxy resin had an EEW of 510, with an epoxy group conversion degree of 50%.

Similarly as in Example 1 trimethylolpropane (24.5 g) and stannous chloride (1.37 g) were added to the reaction product to effect a reaction at 170 to 175 °C for two hours. The modified epoxy resin obtained after the completion of the reaction had an EEW of 650, with an epoxy group conversion degree of 20%.

Examples 5 to 8 and Comparative Examples 5 to 9

In the respective examples, use was made of the modified epoxy resins obtained in the aforementioned Examples 1 to 4 and comparative Examples 1 to 4, as well as commercially available EPIKOTE 1004, so that various kinds of powder coatings were prepared according to the formulations shown in Table 1. Each of the thus prepared powder coatings was sprayed onto a phosphate-treated zinc plate with the use of a spray gun so as to form a coating film thereon having a thickness of from 30 to 50 micrometre, followed by baking at a temperature of 130 °C or 150 °C for thirty minutes.

The thus formed coatings each were tested to determine flexibility, impact strength and resistance to solvent attack. Gelling time before stoving of each of the coatings was also determined. The results are shown in Table 1.

The test procedures and assessment scale employed in the above were as follows:

(i) Flexibility Determined according to JIS K5400 (with the use of a mandrel having a diameter of 2 mm). The assessment scale is as follows:

5

K    very good

L    good

M    cracks found

(ii) Impact strength Determined according to JIS K5400

(iii) curing characteristics (gelling time) Determined according to JIS C2104

(iv) Resistance to solvent attack A laminate consisting of sixteen layers of industrial gauge was moistened with methylethyl ketone and fixed onto the head of a two pound hammer. By rubbing the surfaces of coated plates under test by the above-mentioned hammer with the laminate fixed thereto, the eluation status of the coatings on the plates was determined. The assessment values are based on repetition times of rubbing until the grounds of the plates had been exposed due to eluation of the coatings.

The curing schedule was 30 min, 130 °c for all events, except Comparative Example 9. Then it was 30 min, 150 °C.

TABLE 1

|  | Examples | | | | Comparative Examples | | | | |
|---|---|---|---|---|---|---|---|---|---|
|  | 5 | 6 | 7 | 8 | 5 | 6 | 7 | 8 | 9 |
| Resin of Example 1 | 90 | | | | | | | | |
| Resin of Example 2 | | 90 | | | | | | | |
| Resin of Example 3 | | | 90 | | | | | | |
| Resin of Example 4 | | | | 90 | | | | | |
| Resin of Comparative Example 1 | | | | | 90 | | | | |
| Resin of Comparative Example 2 | | | | | | 90 | | | |
| Resin of Comparative Example 4 | | | | | | | 90 | | |
| E-1004 *1 | | | | | | | | 90 | 90 |
| Epon 2002 *2 FC10 | 10 | 10 | 10 | 10 | 10 | 10 | 10 | 10 | 10 |
| M-8540 *3 | 17 | 11 | 37 | 38 | 20 | 41 | 39 | 28 | 28 |
| Benzoylphenyl carbinol | 0.5 | 0.5 | 0.5 | 0.5 | 0.5 | 0.5 | 0.5 | 0.5 | 0.5 |
| $TiO_2$ | 69 | 69 | 69 | 69 | 69 | 69 | 69 | 69 | 69 |
| Gel Time of Coating Films (sec) | | | | | | | | | |
| 180 °C | 89 | 81 | 107 | 95 | 91 | 81 | 101 | 235 | 235 |
| 200 °C | 56 | 53 | 68 | 61 | 59 | 52 | 65 | 118 | 118 |
| Flexibility (Mandrel Diameter = 2 mm) | K | K | K | K | L | M | L | M | L |
| Impact Strength (cm.kg) | >600 | >600 | >600 | >600 | >600 | 480 | 480 | 360 | 540 |
| Resistance to Solvent Attack (MEK Double rubs) | >100 | >100 | >100 | >100 | >100 | >100 | >100 | 81 | >100 |

EP 0 459 592 A2

Notes in Table 1

*1 ...      available from Yuka Shell Epoxy K.K.

*2 ...      available from Shell Chemical Co., Inc.

*3 ...      Carboxyl group terminal polyester resin (M-8540, trade name; available from Dainihon Ink K.K., having an acid number of 210 mg KOH/g) The blending ratio was one carboxyl group per epoxy group.

From table 1 it can be derived that the cured coating films of the modified epoxy resins according to the present invention exhibit a good balance of flexibility, adhesion and impact strength.

**Claims**

1. A modified epoxy resin composition obtainable by:
   i) reacting one or more epoxy resin compound(s) with a dibasic acid to obtain an epoxy group conversion of from 10 to 70%, and
   ii) reacting the resulting esterified epoxy resin with a trihydric primary aliphatic alcohol having from 5 to 12 carbon atoms to obtain an epoxy group conversion of from 30 to 80% in said esterified epoxy resin.

2. An epoxy resin composition as claimed in claim 1, wherein the reaction mixture in i) in addition comprises a dihydric phenolic compound.

3. An epoxy resin composition as claimed in claim 1 or 2, wherein in i) the equivalent ratio of dibasic acid, plus dihydric phenolic compound if present, and epoxy resin compound(s) is of from 0.06:1.0 to 0.5:1.0.

4. An epoxy resin composition as claimed in any one of the claims 1 to 3, wherein the epoxy resin compounds applied in i) are a mixture of a bisphenol type epoxy resin and an epoxy resin containing at least three epoxy groups per molecule.

5. An epoxy resin composition as claimed in claim 4, wherein the epoxy resin containing at least three epoxy groups per molecule is a polyfunctional epoxy novolac resin.

6. An epoxy resin composition as claimed in any one of the claims 1 to 5, wherein the dibasic acid applied in i) is a polymerised fatty acid obtained by polymerization of unsaturated fatty acids.